# EUROPÄISCHE PATENTSCHRIFT

(11) **EP 1 325 617 B1**
(45) Veröffentlichungstag und Bekanntmachung des Hinweises auf die Patenterteilung: **23.03.2016**
(21) Anmeldenummer: 01978117.8
(22) Anmeldetag: 11.09.2001
(51) Int. Cl.: H04M 7/00, H04M 3/42

(54) **SYSTEMWEITE VERFÜGBARMACHUNG VON LEISTUNGSMERKMALEN BEI EINER VERNETZUNG VON KOMMUNIKATIONSANLAGEN**
COMMUNICATIONS SYSTEM AND METHOD FOR CONTROLLING FEATURES IN A COMMUNICATIONS SYSTEM
SYSTEME DE COMMUNICATION ET PROCEDE POUR COMMANDER DES FONCTIONS DANS UN SYSTEME DE COMMUNICATION

(30) Priorität: 29.09.2000 DE 10048349
(43) Veröffentlichungstag der Anmeldung: 09.07.2003
(73) Patentinhaber: Unify GmbH & Co. KG, 81379 München (DE)
(72) Erfinder: AICHER, Helmut, 80689 München (DE); WINKLER, Steffi, 82131 Gauting (DE); HIERHOLZER, Peter, 82407 Wielenbach (DE); WINDECKER, Rainer, 81739 München (DE)
(74) Vertreter: Fritzsche, Thomas
(86) Internationale Anmeldenummer: PCT/DE2001/003490
(87) Internationale Veröffentlichungsnummer: WO 2002/028071

(56) Entgegenhaltungen:
- EP-A- 0 966 145
- CRONIN P: "AN INTRODUCTION TO TSAPI AND NETWORK TELEPHONY" IEEE COMMUNICATIONS MAGAZINE, IEEE SERVICE CENTER. PISCATAWAY, N.J, US, Bd. 34, Nr. 4, 1. April 1996 (1996-04-01), Seiten 48-54, XP000586070 ISSN: 0163-6804

## Beschreibung

Die Erfindung betrifft ein Verfahren zur Leistungsmerkmalsteuerung in einem Kommunikationssystem und ein Kommunikationssystem.

Leistungsmerkmale sind Funktionalitäten von Kommunikationsendgeräten. Es existieren dienstunabhängige Leistungsmerkmale mit Zusatzfunktionen, welche die Bedienung eines Kommunikationsendgerätes erleichtern und vereinfachen. Daneben können Leistungsmerkmale auf Dienstmerkmalen aufbauen. Bei Telefonen gehören u.a. das Lautsprechen, die Wahlwiederholung, das Freisprechen, das Trennen, das Umlegen, die Wahlwiederholung, der automatische Rückruf oder die Rufweiterleitung zu solchen Leistungsmerkmalen.

Bei einer Vernetzung von Kommunikationsanlagen innerhalb eines Kommunikationssystems bestimmt sich die Anzahl systemweit verfügbarer Leistungsmerkmale bisher einerseits daraus, daß die Leistungsmerkmale in den jeweiligen Kommunikationsanlagen verfügbar sein müssen. Andererseits müssen Leistungsmerkmal-steuerungsinformationen mit Hilfe eines systemeinheitlichen Signalisierungsprotokolls übermittelt werden können. Deswegen ist die Anzahl systemweit verfügbarer Leistungsmerkmale im Vergleich zu den in einer der Kommunikationsanlagen verfügbaren Leistungsmerkmalen bisher recht gering.

Die Aufgabe der vorliegenden Erfindung besteht darin, bei einer Vernetzung von Kommunikationsanlagen innerhalb eines Kommunikationssystems in einer der Kommunikationsanlagen verfügbare Leistungsmerkmale systemweit verfügbar zu maschen.

Diese Aufgabe wird erfindungsgemäß durch ein Verfahren mit den in Anspruch 1 angegebenen Merkmalen und durch ein Kommunikationssystem mit den in Anspruch 7 angegebenen Merkmalen gelöst. Vorteilhafte Weiterbildungen des erfindungsgemäßen Verfahrens sind den abhängigen Ansprüchen zu entnehmen.

Ein wesentlicher Aspekt der Erfindung besteht darin, daß Kommunikationsanlagen mittels einer Computer-Telefonie-Integration-Schnittstelle (CTI) für eine Übermittlung von Leistungsmerkmalsteuerungsinformationen und Funktionsaufrufen vernetzt werden. Bisher wurden CTI-Schnittstellen ausschließlich zur Kopplung von Computern und Kommunikationsendgeräten oder Computern und Kommunikationsanlagen genutzt. Bei der vorliegenden Erfindung stellt eine erste an die CTI-Schnittstelle angeschlossene Kommunikationsanlage eine gesteuerte Instanz hinsichtlich einer Leistungsmerkmalsteuerung dar, während eine zweite an die CTI-Schnittstelle angeschlossene Kommunikationsanlage eine steuernde Instanz darstellt. Dies eröffnet die Möglichkeit, eine in der zweiten Kommunikationsanlage vorhandene Leistungsmerkmalsteuerung für die erste Kommunikationsanlage nutzbar zu machen.

Die Erfindung wird nach folgend an einem Ausführungsbeispiel anhand der Zeichnung näher erläutert. Es zeigt
- Figur 1: ein Kommunikationssystem mit zwei Kommunikationsanlagen und
- Figur 2: ein Ablaufdiagramm für ein Verfahren zur Leistungsmerkmalsteuerung in einem Kommunikationssystem.

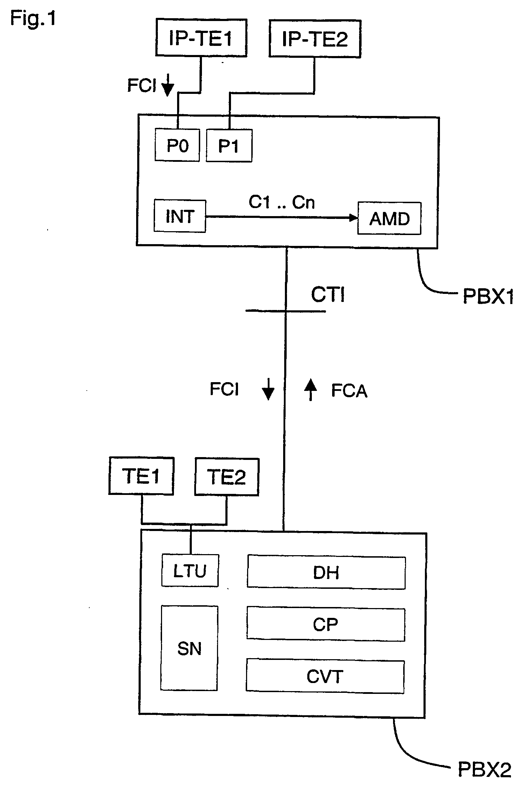

Das in Figur 1 dargestellte Kommunikationssystem weist eine erste Kommunikationsanlage PBX1 und eine zweite Kommunikationsanlage PBX2 auf. Die erste Kommunikationsanlage PBX1 ist eine Voice-over-Internet-Protocol-Kommunikationsanlage (VoIP). Dies bedeutet, daß Kommunikationsverbindungen innerhalb der ersten Kommunikationsanlage PBX1 paketorientiert aufgebaut werden. In der ersten Kommunikationsanlage PBX1 ist nur eine geringe Anzahl an Leistungsmerkmalen verfügbar. An die erste Kommunikationsanlage PBX1 sind IP-Telefone (Internet Protocol) IP-TE1, IP-TE2 angeschlossen.

Die zweite Kommunikationsanlage PBX2 ist eine konventionelle Kommunikationsanlage. Kommunikationsverbindungen innerhalb der zweiten Kommunikationsanlage PBX2 werden verbindungsorientiert aufgebaut. Die zweite Kommunikationsanlage PBX2 weist ein Koppelnetz SN, eine vermittlungstechnische Steuerungseinrichtung CP, eine Gerätesteuerungseinrichtung DH und eine periphere Anschlußeinrichtung LTU auf. An die zweite Kommunikationsanlage sind zwei Kommunikationsendgeräte TE1, TE2 angeschlossen, für die in der zweiten Kommunikationsanlage eine große Anzahl an Leistungsmerkmalen verfügbar ist.

Die erste und die zweite Kommunikationsanlage PBX1, PBX2 sind zur Steuerung und Überwachung der ersten Kommunikationsanlage PBX1 über eine Computer-Telefonie-Integration-Schnittstelle CTI verbunden. Die erste Kommunikationsanlage PBX1 stellt dabei hinsichtlich einer Steuerung von Leistungsmerkmalen eine gesteuerte Instanz. Die zweite Kommunikationsanlage PBX stellt hingegen eine steuernde Instanz dar. Die vermittlungstechnische Steuerungseinheit CP der zweiten Kommunikationsanlage PBX2 nimmt Funktionen eines die erste Kommunikationsanlage PBX1 steuernden Applikationsprogramms wahr. Für die zweite Kommunikationsanlage PBX2 stellt die erste Kommunikationsanlage PBX1 damit hinsichtlich der Leistungsmerkmalsteuerung ein über die Gerätesteuerungseinrichtung DH zu steuerndes Gerät bzw. eine Gruppe von Geräten dar.

Sofern in der ersten Kommunikationsanlage PBX1 ausreichend viele CTI-Schnittstellenfunktionen implementiert sind, insbesondere entsprechend dem Computer-Supported-Telecommunications-Protokoll (CSTA) oder einem durch die Internationale Fernmeldeunion (ITU) empfohlenen Protokoll für intelligente Netze (IN), und sofern sich Leistungsmerkmalsteuerungsbefehle der zweiten Kommunikationsanlage PBX2 in Aufrufe von CTI-Schnittstellenfunktionen umwandeln bzw. aufteilen lassen, entspricht die Anzahl von systemweit verfügbaren Leistungsmerkmalen der Anzahl der in der zweiten Kommunikationsanlage PBX2 verfügbaren Leistungsmerkmale. Die Kopplung der ersten und der zweiten Kommunikationsanlage PBX1, PBX2 bietet bei einer in der zweiten Kommunikationsanlage PBX2 vorhandenen ausgereiften Leistungsmerkmalsteuerung den Vorteil, daß die zugehörigen Leistungsmerkmale in der ersten Kommunikationsanlage PBX1 verfügbar sind, auch wenn dort direkt zunächst nur wenige Leistungsmerkmale zur Verfügung stehen. Abgesehen von einer Implementierung von CTI-Schnittstellenfunktionen sind an der ersten Kommunikationsanlage PBX1 keine Anpassungen erforderlich.

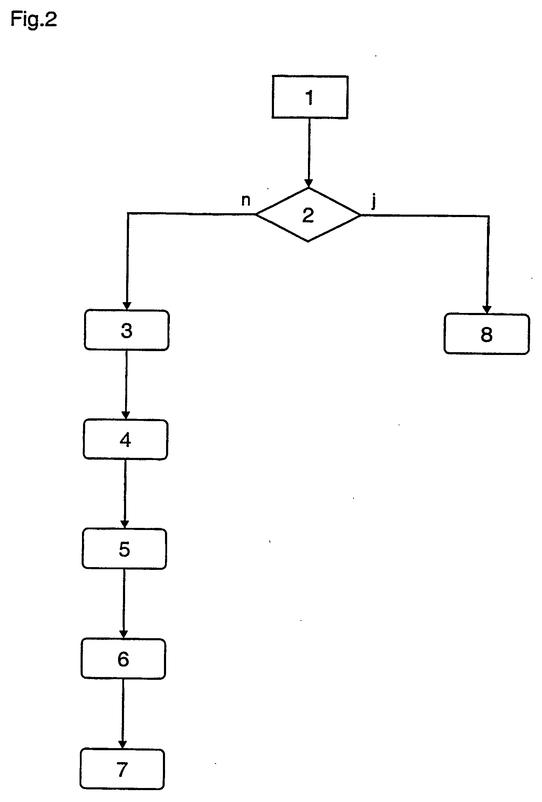

Bei einer Steuerung eines Leistungsmerkmals für einen ersten Teilnehmeranschluß P0 der ersten Kommunikationsanlage PBX1, an den ein erstes IP-Telefon IP-TE1 angeschlossen ist, wird eine für den ersten Teilnehmeranschluß P0 eingegebene Leistungsmerkmalsteuerungsinformation FCI an die erste Kommunikationsanlage PBX1 übermittelt. Dies entspricht Schritt 1 des in Figur 2 dargestellten Ablaufdiagramms. Die Leistungsmerkmalsteuerungsinformation FCI wird beispielsweise an dem ersten IP-Telefon IP-TE1 eingegeben. Sie kann aber auch an einem zweiten IP-Telefon IP-TE2, das an einen zweiten Teilnehmeranschluß P1 der ersten Kommunikationsanlage PBX1 angeschlossen ist, für den ersten Teilnehmeranschluß P0 eingegeben werden, sofern hierfür eine entsprechende Berechtigung vorliegt. Die Leistungsmerkmalsteuerungsinformation FCI kann im einfachsten Fall eine Angabe über eine am ersten IP-Telefon IP-TE1 zur Leistungsmerkmalsteuerung gedrückte Taste enthalten. Alternativ oder zusätzlich dazu kann die Leistungsmerkmalsteuerungsinformation FCI eine Angabe über einen Leistungsmerkmalsteuerungsbefehl aufweisen. Beide genannten Angaben erlauben eine einfache Auswertung der Leistungsmerkmalsteuerungsinformation FCI in der ersten Kommunikationsanlage PBX1.

Nachfolgend wird überprüft, ob ein der Leistungsmerkmalsteuerungsinformation FCI zugeordneter Leistungsmerkmalsteuerungsbefehl in der ersten Kommunikationsanlage PBX1 ausführbar ist (Schritt 2). Bei einer Ausführbarkeit des Leistungsmerkmalsteuerungsbefehls wird dieser durch eine betriebstechnische Einrichtung AMD der ersten Kommunikationsanlage PBX1 ausgeführt (Schritt 8). Ist der Leistungsmerkmalsteuerungsbefehl nicht in der ersten Kommunikationsanlage PBX1 ausführbar, so wird die Leistungsmerkmalsteuerungsinformation FCI an die zweite Kommunikationsanlage PBX2 weitergeleitet (Schritt 3). Die Leistungsmerkmalsteuerungsinformation FCI wird dort in einer Umsetzereinrichtung CVT in mindestens einen Funktionsaufruf FCA umgewandelt, dessen zugehörige Funktion durch die CTI-Schnittstelle CTI bereitgestellt wird (Schritt 4). Alternativ dazu wäre auch eine Umwandlung der Leistungsmerkmalsteuerungsinformation FCI durch erste Kommunikationsanlage PBX1 vor der Weiterleitung der Leistungsmerkmalsteuerungsinformation FCI an die zweite Kommunikationsanlage PBX2 möglich.

Der Funktionsaufruf FCA bzw. eine Funktionsaufrufsequenz mit mehreren Funktionsaufrufen FCA wird über die CTI-Schnittstelle CTI an die erste Kommunikationsanlage PBX1 übermittelt (Schritt 5) und dort in einer Auswerteeinrichtung INT hinsichtlich im Funktionsaufruf FCA bzw. in der Funktionsaufrufsequenz enthaltener Leistungsmerkmalsteuerungsbefehle C1 bis Cn analysiert (Schritt 6). In der Auswerteeinrichtung INT ermittelte Leistungsmerkmalsteuerungsbefehle C1 bis Cn werden dann an die betriebstechnische Einrichtung AMD übermittelt und durch diese ausgeführt (Schritt 7).

Die CTI-Schnittstelle CTI wird im vorliegenden Ausführungsbeispiel in beide Richtungen genutzt. In Richtung zur zweiten Kommunikationsanlage PBX2 wird sie für Meldungs- und Überwachungsfunktionen genutzt, während sie in Richtung zur ersten Kommunikationsanlage PBX1 für Steuerungsfunktionen genutzt wird.

Falls der Leistungsmerkmalsteuerungsinformation FCI mehrere Leistungsmerkmalsteuerungsbefehle zugeordnet sind, wird analog zu Schritt 2 überprüft, welche der Leistungsmerkmalsteuerungsbefehle in der ersten Kommunikationsanlage PBX1 ausführbar sind. Ausführbare Leistungsmerkmalsteuerungsbefehle können dann dort direkt ausgeführt werden. Für nicht ausführbare Leistungsmerkmalsteuerungsbefehle wird die Leistungsmerkmalsteuerungsinformation FCI zur Kennzeichnung der nicht ausführbaren Leistungsmerkmalsteuerungsbefehle modifiziert, an die zweite Kommunikationsanlage PBX2 weitergeleitet und entsprechend der vorangehenden Beschreibung verarbeitet.

Die Steuerung von Leistungsmerkmalen für den zweiten Teilnehmeranschluß P1 erfolgt analog zur beschriebenen Leistungsmerkmalsteuerung für den ersten Teilnehmeranschluß P0. Die Leistungsmerkmalsteuerung für die Teilnehmeranschlüsse der zweiten Kommunikationsanlage PBX2, an welche die Kommunikationsendgeräte TE1, TE2 angeschlossen sind, wird im Vergleich zu einem Stand-Alone-Betrieb der zweiten Kommunikationsanlage PBX2 in unveränderter Weise durchgeführt.

Die Erfindung ist nicht auf das beschriebene Ausführungsbeispiel beschränkt, insbesondere nicht auf eine Kopplung einer konventionellen und einer VoIP-Kommunikationsanlage. Grundsätzlich sind alle denkbaren Kombinationen zweier oder mehrerer Kommunikationsanlagen mit verschiedenen an diesen angeschlossenen Kommunikationsendgeräten möglich.

## Patentansprüche

1. Verfahren zur Leistungsmerkmalsteuerung in einem Kommunikationssystem mit einer ersten Kommunikationsanlage (PBX1) und einer zweiten Kommunikationsanlage (PBX2), wobei die erste und die zweite Kommunikationsanlage (PBX1, PBX2) zur Steuerung und Überwachung der ersten Kommunikationsanlage (PBX1) über eine Computer-Telefonie-Integration-Schnittstelle (CTI) verbunden sind, bei dem
a) eine für einen Teilnehmeranschluß (P0) der ersten Kommunikationsanlage (PBX1) eingegebene Leistungsmerkmalsteuerungsinformation (FCI) von einem an die erste Kommunikationsanlage (PBX1) anpeschlossenen Telefon an die erste Kommunikationsanlage (PBX1) übermittelt wird (1),
b) zur Auswertung der Leistungsmerkmalsteuerungsinformation (FCI) in der ersten Kommunikationsanlage (PBX1) überprüft wird, ob ein der Leistungsmerkmalsteuerungsinformation (FCI) zugeordneter Leistungsmerkmalsteuerungsbefehl (C1,..,Cn) in der ersten Kommunikationsanlage (PBX1) ausführbar ist (2),
c) die Leistungsmerkmalsteuerungsinformation (FCI) nach einer Überprüfung der Ausführbarkeit eines der Leistungsmerkmalsteuerungsinformation (FCI) zugeordneten Leistungsmerkmalsteuerungsbefehls (C1,..,Cn) in der ersten Kommunikationsanlage (PBX1) nur bei einer Nichtausführbarkeit über die CTI-Schnittstelle (CTI) an die zweite Kommunikationsanlage (PBX2) übermittelt wird (3),
d) die Leistungsmerkmalsteuerungsinformation (FCI) durch die Zweite Kommunikationsanlage (PBX2) in zumindest einen Funktionsaufruf (FCA) umgewandelt wird (4), dessen zugehörige Funktion durch die Computer-Telefonie-Integration-Schnittstelle (CTI) bereitgestellt wird (5),
e) der Funktionsaufruf (FCA) über die Computer-Telefonie-Integration-Schnittstelle (CTI) an die erste Kommunikationsanlage (PBX1) übermittelt wird (5) und dort in einer Auswerteeinrichtung (INT) hinsichtlich im Funktionsaufruf (FCA) bzw. in der Funktionsaufrufsequenz enthaltener Leistungsmerkmalsteuerungsbefehle (C1,..,Cn) analysiert wird (6) und,
f) zumindest ein im Funktionsaufruf (FCA) enthaltener und in der Auswerteeinrichtung (INT) ermittelter Leistungsmerkmalsteuerungsbefehl (C1,..,Cn) an eine betriebstechnische Einrichtung (AMD) der ersten Kommunikationsanlage (PBX1) übermittelt und durch diese ausgeführt wird (7).

2. Verfahren nach Anspruch 1,
**dadurch gekennzeichnet, daß** die Leistungsmerkmalsteuerungsinformation (FCI) durch die erste Kommunikationsanlage (PBX1) oder die zweite Kommunikationsanlage (PBX2) in den Funktionsaufruf (FCA) umgewandelt wird.

3. Verfahren nach Anspruch 1 oder 2,
**dadurch gekennzeichnet, daß** der Leistungsmerkmalsteuerungsbefehl (C1,..,Cn) bei einer Ausführbarkeit durch die betriebstechnische Einrichtung (AMD) der ersten Kommunikationsanlage (PBX1) ausgeführt wird (7, 8).

4. Verfahren nach einem der Ansprüche 1 bis 3,
**dadurch gekennzeichnet, daß** die zum Funktionsaufruf (FCA) zugehörige Funktion entsprechend dem Computer-Supported-Telecommunications-Application-Protokoll (CSTA-Protokoll) implementiert ist.

5. Verfahren nach einem der Ansprüche 1 bis 3,
**dadurch gekennzeichnet, daß** die zum Funktionsaufruf (FCA) zugehörige Funktion entsprechend einem durch die Internationale Fernmeldeunion (ITU) empfohlenen Protokoll für Intelligente Netze (IN) implementiert ist.

6. Verfahren nach einem der Ansprüche 1 bis 5,
**dadurch gekennzeichnet, daß** Kommunikationsverbindungen innerhalb der ersten Kommunikationsanlage (PBX1) paketorientiert aufgebaut werden, und daß Kommunikationsverbindungen innerhalb der zweiten Kommunikationsanlage (PBX2) verbindungsorientiert aufgebaut werden.

7. Kommunikationssystem mit
- einer ersten Kommunikationsanlage (PBX1),
- einer zweiten Kommunikationsanlage (PBX2),
- einer Computer-Telefonie-Integration-Schnittstelle (CTI) für eine Übermittlung von Leistungsmerkmalsteuerungsinformationen (FCI) und Funktionsaufrufen (FCA) vernetzt werden, über welche die erste Kommunikationsanlage (PBX1) und die zweite Kommunikationsanlage (PBX2) miteinander zur Steuerung und Überwachung der ersten Kommunikationsanlage (PBX1) verbunden sind,
wobei das System Mittel zur Ausführung der in den Ansprüchen 1-6 genannten Verfahren auf weist.

## Claims

1. A method for controlling features in a communication system having a first communication installation (PBX1) and a second communication installation (PBX2), wherein the first and second communication installations (PBX1, PBX2) are connected via a computer telephony integration interface (CTI) for controlling and monitoring the first communication installation (PBX1), wherein
(a) an item of feature control information (FCI) input for a subscriber line (P0) of the first communication installation (PBX1) is transmitted to the first communication installation (PBX1) via a telephone connected to the first communication installation (PBX1) (1);
(b) for analysis of the item of feature control information (FCI) in the first communication installation (PBX1) it is verified whether a performance feature control instruction (C1, ..., Cn) assigned to the item of feature control information (FCI) is executable by the first communication installation (PBX1) (2),
(c) after verification of the executability of a feature control instruction (C1, ..., Cn) assigned to the item of feature control information (FCI) in the first communication installation (PBX1), the item of feature control information (FCI) is only transmitted to the second communication installation (PBX2) in the event of non-executability via the CTI interface (CTI) (3)
(d) the item of feature control information (FCI) is converted by the second communication installation (PBX2) into at least one function call (FCA) (4), the associated function of which is provided by the computer telephony integration interface (CTI) (5),
(e) the function call (FCA) is transmitted to the first communication installation (PBX1) via the computer telephony integration interface (CTI) (5), and where it is analyzed in an analysis unit (INT) with respect to feature control instructions (C1, ..., Cn) contained in the function call (FCA) or in the function call sequence (6), and
(f) at least one feature control instruction (C1, ..., Cn) contained in the function call (FCA) and identified in the analysis unit (INT) is then transmitted to a administration and maintenance device (AMD) of the first communication installation (PBX1) and executed by the same (7).

2. The method according to claim 1,
**characterized in that** the item of feature control information (FCI) is converted to the function call (FCA) by the first communication installation (PBX1) or the second communication installation (PBX2).

3. The method according to claim 1 or 2,
**characterized in that** the feature control instruction (C1, ..., Cn) is executed when executable by the administration and maintenance device (AMD) of the first communication installation (PBX1) (7, 8).

4. The method according to any one of claims 1 to 3, **characterized in that** the function associated with function call (FCA) is implemented according to a computer supported telecommunications application protocol (CSTA protocol).

5. The method according to any one of claims 1 to 3, **characterized in that** the function associated with function call (FCA) is implemented according to a protocol for intelligent networks (IN) recommended by the International Telecommunication Union (ITU).

6. The method according to any one of claims 1 to 5, **characterized in that** communication links within the first communication installation (PBX1) are packet-based and communication links within the second communication installation (PBX2) are connection-based.

7. A communication system, having
- a first communication installation (PBX1)
- a second communication installation (PBX2)
- a computer telephony integration interface (CTI), for a transmission of feature control information (FCI) and function calls (FCA) are networked, via which the first communication installation (PBX1) and the second communication installation (PBX2) are connected to each other to control and monitor the first communication installation (PBX1), wherein the system has means to perform the method mentioned in claims 1-6.

## Revendications

1. Procédé servant à commander une fonctionnalité dans un système de communication comprenant une première installation de communication (PBX1) et une deuxième installation de communication (PBX2), sachant que la première et la deuxième installation de communication (PBX1, PBX2) sont reliées par l'intermédiaire d'une interface d'intégration de téléphonie informatique (CTI) afin de commander et de surveiller la première installation de communication (PBX1), dans le cadre duquel
a) une information de commande de fonctionnalité (FCI) entrée pour un port d'abonné (P0) de la première installation de communication (PBX1) est transmise (1) à la première installation de communication (PBX1) par un téléphone connecté à la première installation de communication (PBX1),
b) on vérifie, afin d'analyser l'information de commande de fonctionnalité (FCI), dans la première installation de communication (PBX1) si une instruction de commande de fonctionnalité (C1, ..., Cn) associée à l'information de commande de fonctionnalité (FCI) peut être exécutée (2) dans la première installation de communication (PBX1),
c) l'information de commande de fonctionnalité (FCI) est transmise (3), après une vérification de la possibilité de l'exécution d'une instruction de commande de fonctionnalité (C1, ..., Cn) associée à la première information de commande de fonctionnalité (FCI) dans la première installation de communication (PBX1), seulement en présence de l'impossibilité d'exécution, par l'intermédiaire de l'interface CTI (CTI), à la deuxième installation de communication (PBX2),
d) l'information de commande de fonctionnalité (FCI) est convertie (4) en au moins un appel de fonction (FCA) par la deuxième installation de communication (PBX2), dont la fonction associée est fournie (5) par l'interface d'intégration de téléphonie informatique (CTI),
e) l'appel de fonction (FCA) est transmis (5) par l'intermédiaire de l'interface d'intégration de téléphonie informatique (CTI) à la première installation de communication (PBX1) et y est analysé (6) dans un dispositif d'analyse (INT) eu égard aux instructions de commande de fonctionnalité (C1, ..., Cn) contenues dans l'appel de fonction (FCA) ou dans la séquence d'appels de fonction, et
f) au moins une instruction de commande de fonctionnalité (C1, ..., Cn) contenue dans l'appel de fonction (FCA) et déterminée dans le dispositif d'analyse (INT) est transmise à un dispositif (AMD) technique opérationnel de la première installation de communication (PBX1) et est exécutée (7) par ce dernier.

2. Procédé selon la revendication 1,
**caractérisé en ce que** l'information de commande de fonctionnalité (FCI) est convertie en l'appel de fonction (FCA) par la première installation de communication (PBX1) ou par la deuxième installation de communication (PBX2).

3. Procédé selon la revendication 1 ou 2,
**caractérisé en ce que** l'instruction de commande de fonctionnalité (C1, ..., Cn) est exécutée (7, 8), dans le cas d'une possibilité d'exécution, par le dispositif (AMD) technique opérationnel de la première installation de communication (PBX1).

4. Procédé selon l'une quelconque des revendications 1 à 3,
**caractérisé en ce que** la fonction associée à l'appel de fonction (FCA) est implémentée de manière conforme au protocole de niveau applicatif de télécommunication assistée par ordinateur (protocole CSTA).

5. Procédé selon l'une quelconque des revendications 1 à 3,
**caractérisé en ce que** la fonction associée à l'appel de fonction (FCA) est implémentée de manière conforme au protocole recommandé par l'Union internationale des télécommunications (ITU) pour des réseaux intelligents (IN).

6. Procédé selon l'une quelconque des revendications 1 à 5,
**caractérisé en ce que** des liaisons de communication sont établies selon une orientation par paquets à l'intérieur de la première installation de communication (PBX1), et **en ce que** des liaisons de communication sont établies selon une orientation de liaison à l'intérieur de la deuxième installation de communication (PBX2).

7. Système de communication comprenant
- une première installation de communication (PBX1),
- une deuxième installation de communication (PBX2),
- une interface d'intégration de téléphonie informatique (CTI) pour une transmission d'informations de commande de fonctionnalité (FCI) et d'appels de fonction (FCA), par l'intermédiaire de laquelle la première installation de communication (PBX1) et la deuxième installation de communication (PBX2) sont reliées l'une à l'autre afin de commander et de surveiller la première installation de communication (PBX1),
sachant que le système comprend des moyens servant à exécuter le procédé mentionné dans les revendications 1 à 6.
